# FASCICULE DE BREVET EUROPEEN

(11) **EP 1 307 273 B1**
(45) Date de publication et mention de la délivrance du brevet: **08.06.2005**
(21) Numéro de dépôt: 01956641.3
(22) Date de dépôt: 25.07.2001
(51) Int. Cl.: B01D 29/15, B01D 29/54, B01D 29/96

(54) **BOITIER DE MICROFILTRATION**
FILTERGEHÄUSE FÜR MIKROFILTRATION
MICROFILTRATION HOUSING

(30) Priorité: 26.07.2000 FR 0009776
(43) Date de publication de la demande: 07.05.2003
(73) Titulaire: Moulage Industriel de Perseigne "MIP", 72600 Mamers (FR)
(72) Inventeur: CROUAN, Alain, F-72000 Le Mans (FR)
(74) Mandataire: Breese, Pierre
(86) Numéro de dépôt international: PCT/FR2001/002435
(87) Numéro de publication internationale: WO 2002/007856

(56) Documents cités:
- EP-A- 0 678 318
- WO-A-99/59691
- US-A- 3 633 757
- US-A- 3 733 267
- US-A- 3 870 636
- US-A- 5 486 290
- US-A- 5 833 847

## Description

La présente invention se rapporte à un boîtier de microfiltration de liquides et, en particulier, à un boîtier de microfiltration des huiles hydrauliques, des huiles de carter de véhicules automobiles et notamment de gasoil, de solvants et de fluides.

De tels filtres sont connus. Ils sont branchés en dérivation entre une prise d'huile sous pression et le carter d'huile qui lubrifie le moteur. Le circuit principal de lubrification inclut une pompe à huile qui pompe l'huile dans le carter d'huile, connectée à un filtre primaire qui filtre l'huile avant de la diriger vers le moteur. Mais la perméabilité de tels filtres est pratiquement limitée à une finesse de filtration de l'ordre de quinze microns pour ne pas présenter une résistance de charge trop importante. Or la grande majorité des impuretés présentes dans l'huile ont une dimension très inférieure à 15 microns, 80 à 95% des particules ayant des dimensions comprises entre un et cinq microns. Il en résulte que la filtration actuellement pratiquée n'est pas satisfaisante, la majorité des particules passant à travers le filtre. L'huile doit donc être vidangée à des intervalles de temps assez rapprochés.

Dans ce type de boîtier de filtration d'huile, les moyens de filtration sont constitués par des cartouches de matières filtrantes dont les dimensions sont choisies de manière à obtenir un volume de filtre permettant d'atteindre la capacité d'absorption souhaitée.

Dès lors, en fonction de la capacité du carter du circuit de lubrification destiné à être équipé d'un tel boîtier, il est nécessaire de prévoir différentes tailles de boîtiers et de cartouches de filtration ce qui renchérit les coûts de fabrication et stockage des matériels destinés à la commercialisation.

Il a déjà été proposé de constituer un filtre par la mise bout à bout d'éléments filtrants. US-A-5 486 290 le filtre comprenant deux éléments filtrants montés en série à l'intérieur d'une enveloppe est un filtre à flux axial. Dans la zone de jonction des deux éléments filtrants le fluide passe à travers un flasque perforé. Au contraire, dans le boîtier de microfiltration, le filtrage se fait en direction radiale, le liquide passant de la paroi extérieure vers la paroi intérieure de chaque élément filtrant.

Un autre dispositif comprenant un ensemble d'éléments de filtration est décrit dans US-A-3 633 757 comprenant un axe creux central et une pluralité d'éléments radiaux flexibles, un manchon souple de filtration entourant lesdits éléments, les variations de la pression différentielle entre l'intérieur et l'extérieur du filtre provoquant des mouvements des lames flexibles qui nettoient automatiquement ledit filtre. Tel n'est pas le cas dans la présente demande.

Enfin, le document US 5 833 847 révèle un boîtier de microfiltration conforme au préambule de la revendication 1.

Ce boîtier présente le défaut qu'il peut y avoir flambage des deux filtres disposés axialement dans le prolongement l'un de l'autre et pressés l'un contre l'autre.

Ce défaut est pallié par un boîtier de filtration selon la partie caractérisante de la revendication 1.

Le boîtier de filtration de fluides et en particulier, mais non exclusivement, d'huile selon l'invention peut également comporter une ou plusieurs des caractéristiques suivantes, prises isolément ou selon toutes les combinaisons techniquement possibles :
- le ou chaque flasque d'assemblage comporte une plaque nervurée pourvue, sur chacune de ces grandes faces, d'un nez sur lequel vient s'emmancher l'un desdits filtres ;
- chaque nez est doté d'un joint d'étanchéité ;
- les extrémités libres de chacun des supports de filtre ont une surface périphérique étagée, c'est-à-dire de diamètre interne décroissant en direction de la partie médiane et une face parfaitement droite, verticale et rigide, de manière à faciliter leur emmanchement sur les nez des flasques, le fond ou le couvercle, et éviter toute détérioration des joints d'étanchéité ;
- le support et le ou chaque flasque sont réalisés en une matière plastique moulée ou en composite, ou en fibre de verre associées à d'autres liants ;
- des inserts métalliques formant écrous de vissage de la tige centrale sont surmoulés respectivement dans le fond et dans le couvercle ;
- le fond et le couvercle sont emmanchés chacun dans le support d'un filtre, l'effort d'insertion des supports sur les flasques et sur le couvercle étant supérieur à l'effort d'insertion du support correspondant sur le fond.

D'autres caractéristiques et avantages de l'invention ressortiront de la description suivante, donnée uniquement à titre d'exemple non limitatif en regard des dessins annexés sur lesquels :
la figure 1 est une vue schématique en perspective d'un boîtier de microfiltration d'huile conforme à l'invention ;
la figure 2 est une vue en coupe longitudinale du boîtier de microfiltration d'huile sur la figure 1 ;
la figure 3 est une vue en perspective d'un flasque d'assemblage du boîtier de microfiltration des figures 1 et 2 ; et
la figure 4 est une vue en coupe, à plus grande échelle, d'un support de filtre du boîtier des figures 1 à 3.

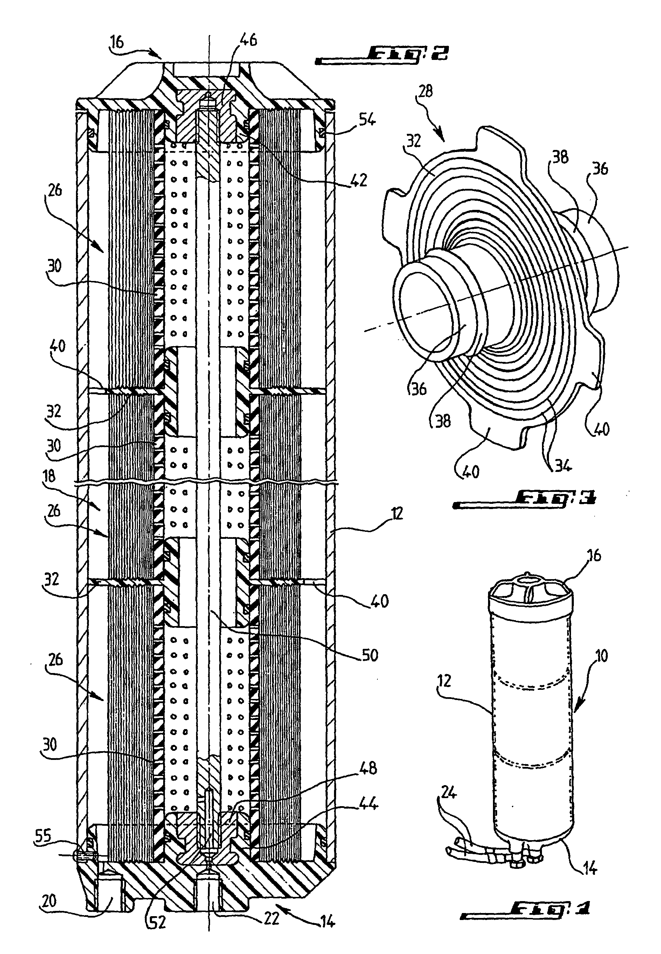

Sur la figure 1, on a représenté un boîtier de microfiltration d'huile conforme à l'invention désigné par la référence numérique générale 10. Il est destiné à être monté en dérivation sur un circuit principal de lubrification d'un moteur de véhicule automobile.

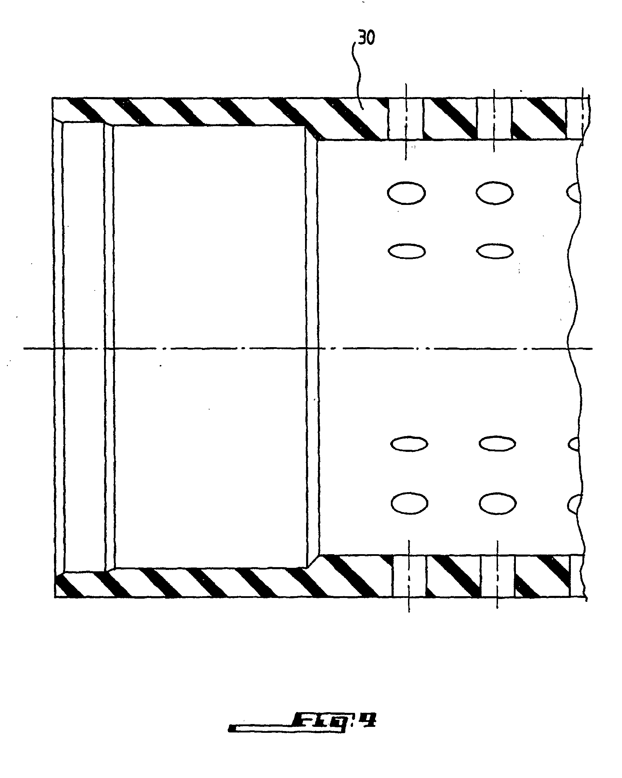

En se référant également à la figure 2, le boîtier 10 comporte principalement un corps 12 généralement cylindrique pourvu d'un fond 14 et d'un couvercle 16 d'obturation et de moyens de filtration, désignés par la contre la surface interne du corps, les ailettes délimitant entre elles les passages d'écoulement d'huile ;
- chaque nez est doté d'un joint d'étanchéité ;
- le support et le ou chaque flasque sont réalisés en une matière plastique moulée ou en composite, ou en fibre de verre associées à d'autres liants.

D'autres caractéristiques et avantages de l'invention ressortiront de la description suivante, donnée uniquement à titre d'exemple non limitatif en regard des dessins annexés sur lesquels:
La figure 1 est une vue schématique en perspective d'un boîtier de microfiltration d'huile conforme à l'invention ;
La figure 2 est une vue en coupe longitudinale du boîtier de microfiltration d'huile sur la figure 1 ;
La figure 3 est une vue en perspective d'un flasque d'assemblage du boîtier de microfiltration des figures 1 et 2 ; et
La figure 4 est une vue en coupe, à plus grande échelle, d'un support de filtre du boîtier des figures 1 à 3.

Sur la figure 1, on a représenté un boîtier de microfiltration d'huile conforme à l'invention désigné par la référence numérique générale 10. Il est destiné à être monté en dérivation sur un circuit principal de lubrification d'un moteur de véhicule automobile.

En se référant également à la figure 2, le boîtier 10 comporte principalement un corps 12 généralement cylindrique pourvu d'un fond 14 et d'un couvercle 16 d'obturation et de moyens de filtration, désignés par la référence numérique 18. Le fond 14 est pourvu d'un orifice 20 d'admission d'huile et d'un orifice 22 de sortie d'huile.

Les orifices 20 et 22 viennent se raccorder, par l'intermédiaire de canalisations 24 au carter (non représenté) contenant l'huile de lubrification du moteur.

Comme représenté en détail sur la figure 2, les moyens de filtration 18 comportent un assemblage modulaire de filtres élémentaires 26 assemblés en série au moyen de flasques d'assemblage 28.

Chaque filtre élémentaire 26 comporte un support 30 muni de perforations autour duquel est enroulée une matière de filtration, par exemple du papier filtre spécial, de manière à constituer une cartouche élémentaire de filtration.

En se référant également à la figure 3, chaque flasque d'assemblage 28 comporte une plaque 32 en forme de disque dont chacune des faces est munie de nervures, telles que 34 et de deux nez 36 s'étendant axialement à partir de ces dernières sur lesquels viennent s'emmancher les supports 30 de deux filtres 26 pour leur assemblage deux à deux.

Chaque nez 36 porte un joint 38 d'étanchéité venant se comprimer contre la face intérieure du support 30 du filtre 26 qui lui correspond.

Ces prolongements cylindriques axiaux 42 et 44 sont pourvus d'un insert métallique, respectivement 46 et 48 formant écrou dans lesquels vient se visser une tige filetée 50, laquelle est pourvue d'un passage 52 débouchant, d'une part, de façon radialement externe dans le volume interne délimité par le support 30 des filtres 26 et, d'autre part, vers l'orifice 22 de sortie d'huile filtrée. Les inserts métalliques 46 et 48 sont surmoulés intégralement pour isoler l'intérieur du boîtier de l'extérieur afin d'éviter toute fuite par capillarité. Le fond 14 et le couvercle 16 sont également pourvus d'une jupe portant un joint 54 d'étanchéité.

De préférence, le fond 14 et le couvercle 16, ainsi que les supports 30 sont réalisés par moulage d'une matière plastique, la paroi constitutive du corps 12 étant, par exemple, réalisée à partir d'un alliage métallique approprié.

On notera que le diamètre de la jupe de fond 14 est conformé de manière que ce dernier s'emmanche à force dans le corps 12, seul le couvercle 16 venant se monter de manière amovible. Il est possible de prévoir une vis pointeau 55 assurant la liaison mécanique entre le fond 14 et le corps 12.

Par ailleurs, le diamètre du prolongement cylindrique axial 44 du fond 14 est inférieur au diamètre du prolongement 42 correspondant du couvercle 16 et à celui des nez 36 des flasques 28 de manière à obtenir un effort d'insertion des supports 30 sur les flasques 28 et sur le couvercle 16 supérieur à l'effort d'insertion du support 30 sur le fond 14. Dès lors, le démontage du couvercle 16 provoque la dépose de l'ensemble constitué par le couvercle 16 et l'ensemble des filtres 26 montés en série.

On notera enfin que, comme visible sur la figure 4, sur laquelle on a représenté une vue agrandie d'un support 30, les extrémités libres de chacun de ces derniers ont une surface périphérique intérieure de forme générale étagée, c'est-à-dire de diamètre interne décroissant en direction de la partie médiane, de manière à faciliter leur emmanchement sur les flasques 28, le fond 14 ou le couvercle 16, et éviter toute détérioration des joints d'étanchéité.

Pour procéder au montage du boîtier de microfiltration qui vient d'être décrit, il convient d'emmancher à force le fond 14 sur la paroi constitutive du corps 12, d'assembler deux à deux des filtres 26 de manière à obtenir une longueur de filtres correspondant à celle du corps 12, d'emmancher les filtres montés en série sur le fond 14, de visser la vis centrale 50 dans l'insert métallique 46, puis de visser le couvercle 16 sur la vis centrale 50.

Comme on le conçoit, dans cette position, les tranches d'extrémité des filtres 26 sont pressées soit entre deux plaques 34 des flasques d'assemblage 28, soit entre une plaque 34 d'un des flasques 28 et le fond 14 ou le couvercle 16 du boîtier. Ainsi, les nervures ménagées dans la surface contre laquelle s'appuient les filtres procurent une étanchéité parfaite forçant l'huile à circuler radialement à travers la matière filtrante.

## Revendications

1. Boîtier de filtration d'un liquide, constitué d'un corps (12) généralement cylindrique comprenant un fond (14) et un couvercle (16) réunis par une tige centrale (50) filetée à ses deux extrémités, pourvu d'un orifice (20) d'admission, d'un orifice axial (22) de sortie et de moyens (26) de filtration disposés dans le corps (12) sur le trajet de l'huile entre les orifices d'admission et de sortie d'huile, le liquide passant radialement de l'extérieur vers le centre à travers les moyens de filtration, les moyens de filtration comportant un ensemble modulable d'au moins deux filtres (26) généralement cylindriques comprenant une matière filtrante enroulée autour d'un support (30) cylindrique perforé, et une flasque d'assemblage (28) de deux filtres successifs comprenant une plaque (32) pourvue, sur chacune de ses grandes faces, d'un nez (36) sur lequel vient s'emmancher l'un desdits filtres, **caractérisé en ce que** la flasque d'assemblage (28) comporte des ailettes (40) de centrage s'étendant de façon radialement externe et venant en appui contre la surface interne du corps (12), les ailettes (40) délimitant entre elles des passages d'écoulement axial de liquide.

2. Boîtier de filtration selon la revendication 1, **caractérisé en ce que** chaque nez est doté d'un joint d'étanchéité (38).

3. Boîtier de filtration selon la revendication 2, **caractérisé en ce que** les extrémités libres de chacun des supports de filtre (30) ont une surface périphérique intérieure de forme générale étagée, c'est-à-dire de diamètre interne décroissant en direction de la partie médiane et une face parfaitement droite, verticale et rigide, de manière à faciliter leur emmanchement sur les nez (36) des flasques (28), le fond (14) ou le couvercle (16), et éviter toute détérioration des joints d'étanchéité (38).

4. Boîtier de filtration selon la revendication 1 à 3, **caractérisé en ce que** le support et le ou chaque flasque est réalisé en une matière plastique moulée ou en composite ou en fibres de verre associées à d'autres liants.

5. Boîtier de filtration selon l'une quelconque des revendications 1 à 4, **caractérisé en ce que** des inserts métalliques formant écrous de vissage (46, 48) de la tige centrale (50) sont surmoulés respectivement dans le fond (14) et dans le couvercle (16).

6. Boîtier de filtration selon l'une quelconque des revendications précédentes, **caractérisé en ce que** le fond (14) et le couvercle (16) sont emmanchés chacun dans le support (30) d'un filtre (26), l'effort d'insertion des supports (30) sur les flasques (28) et sur le couvercle (16) étant supérieur à l'effort d'insertion du support (30) correspondant sur le fond (14).

## Patentansprüche

1. Aus einem allgemein zylindrischen Korpus (12) mit einem Boden (14) und einem Deckel (16), die durch einen an seinen beiden Enden gewindeten, zentralen Stift (50) verbunden werden, gebildetes Filtergehäuse einer Flüssigkeit mit einer Einlassöffnung (20), einer axialen Ausgangsöffnung (22) und im Korpus (12) auf dem Durchlauf des Öls zwischen der Einlassöffnung und der Ölauslassöffnung angeordneten Filtermitteln (26), wobei die Flüssigkeit radial von außen über die Filtermittel in die Mitte durchläuft, wobei die Filtermittel eine modulierbare Struktur aus wenigstens zwei allgemein zylindrischen Filtern (26) mit einem um einen perforierten zylindrischen Träger (30) aufgerollten Filtermaterial und einen aus zwei sukzessiven Filtern zusammengebauten Flansch (28) mit einer an jeder ihrer großen Flächen mit einer Nase (36), an die einer der genannten Filter angeschäftet wird, versehenen Platte (32) umfassen, **dadurch gekennzeichnet, dass** der zusammengebaute Flansch (28) sich extern radial erstreckende und sich gegen die innere Seite des Korpus (12) aufstützende Zentrierungsflügel (40) umfasst, wobei die Flügel (40) untereinander Durchgänge zum axialen Ablauf der Flüssigkeit begrenzen.

2. Filtergehäuse gemäß Anspruch 1, **dadurch gekennzeichnet, dass** jede Nase mit einem Dichtungsring (38) ausgerüstet ist.

3. Filtergehäuse gemäß Anspruch 2, **dadurch gekennzeichnet, dass** die freien Enden jedes Filterträgers (30) eine innere peripherische Fläche in allgemeiner abgestufter Form haben, das heißt mit einem in Richtung zum medianen Teil abnehmenden Innendurchmesser und einer absolut geraden, vertikalen und steifen Seite, so dass ihr Anschäften auf den Nasen (36) der Flansche (28), dem Boden (14) oder dem Deckel (16) erleichtert und die Beschädigung der Dichtungsringe (38) verhindert wird.

4. Filtergehäuse gemäß Anspruch 1 bis 3, **dadurch gekennzeichnet, dass** der Träger und der oder jeder Flansch aus abgeformtem Plastik- oder Verbundmaterial oder aus anderen Bindemitteln zugeordneten Glasfasern realisiert wird.

5. Filtergehäuse gemäß Anspruch 1 bis 4, **dadurch gekennzeichnet, dass** die Schraubenmuttern (46, 48) bildenden Metalleinsätze des zentralen Stiftes (50) jeweils im Boden (14) und im Deckel (16) aufgeformt sind.

6. Filtergehäuse gemäß einem der vorherigen Ansprüche, **dadurch gekennzeichnet, dass** der Boden (14) und der Deckel (16) jeweils im Träger (30) eines Filters (26) angeschäftet sind, wobei die Einfügekraft der Träger (30) auf den Flanschen (28) und auf dem Deckel (16) größer ist als die Einfügekraft des entsprechenden Trägers (30) auf dem Boden (14).

## Claims

1. A filtration unit for a liquid, consisting of a generally cylindrical body (12) comprising a base (14) and a cover (16) joined by a central rod (50) threaded at both ends, provided with an inlet orifice (20), an axial outlet orifice (22) and filtration means (26) disposed in the body (12) on the path of the oil between the oil inlet and outlet orifices, the liquid passing radially from the outside towards the centre through the filtration means, the filtration means comprising a modular assembly for at least two generally cylindrical filters (26) comprising a filtering material coiled around a perforated cylindrical support (30), and an assembly flange (28) for two successive filters comprising a plate (32) provided, on each of its large faces, with a nose (36) on which one of the said filters is fitted, **characterised in that** the assembly flange (28) comprises centring fins (40) extending in a radially external fashion and coming into abutment against the internal surface of the body (12), the fins (40) delimiting between them axial liquid flow passages.

2. A filtration unit according to Claim 1, **characterised in that** each nose is provided with a seal (38).

3. A filtration unit according to Claim 2, **characterised in that** the free ends of each of the filter supports (30) have an internal peripheral surface with a general stepped shape, that is to say with an inside diameter decreasing in the direction of the middle part and a perfectly straight, vertical and rigid face, so as to facilitate their fitting on the noses (36) of the flanges (28), the base (14) or the cover (16), and preventing any deterioration in the seals (38).

4. A filtration unit according to Claims 1 to 3, **characterised in that** the support and the or each flange are produced from a moulded plastics material and/or composite material or glass fibres associated with other binders.

5. A filtration unit according to any one of Claims 1 to 4, **characterised in that** metallic inserts forming screwing nuts (46, 48) for the central rod (50) are overmoulded respectively in the base (14) and in the cover (16).

6. A filtration unit according to any one of the preceding claims, **characterised in that** the base (14) and the cover (16) are each fitted in the support (30) of a filter (26), the insertion force for the supports (30) on the flanges (28) and on the cover (16) being greater than the insertion force for the corresponding support (30) on the base (14).
